# EUROPÄISCHE PATENTSCHRIFT

(11) **EP 1 329 347 B1**
(45) Veröffentlichungstag und Bekanntmachung des Hinweises auf die Patenterteilung: **13.09.2006**
(21) Anmeldenummer: 03000717.3
(22) Anmeldetag: 13.01.2003
(51) Int. Cl.: B60J 1/14

(54) **Kraftfahrzeug mit schwenkbarem Seitenfenster**
Motor vehicle with pivotable side window
Véhicule avec une fenètre latérale pivotante

(30) Priorität: 22.01.2002 DE 10202170
(43) Veröffentlichungstag der Anmeldung: 23.07.2003
(73) Patentinhaber: Bayerische Motoren Werke Aktiengesellschaft, 80809 München (DE)
(72) Erfinder: Kolling, Joachim, 85386 Eching (DE)

(56) Entgegenhaltungen:
- CH-A- 342 483
- DE-A- 3 925 804
- DE-B- 1 145 940
- GB-A- 835 068
- GB-A- 953 240
- US-A- 2 793 906

## Beschreibung

Die Erfindung betrifft ein Kraftfahrzeug mit mindestens einem schwenkbaren, hinteren Seitenfenster gemäß dem Oberbegriff des Anspruchs 1.

Aus der gattungsgemäßen DE 39 25 804 ist ein hinteres Seitenfenster bekannt, das über eine Klebeschicht (durchlaufend oder abschnittsweise) an der B-Säule angebracht ist. Damit die Klebeschicht auf eine nach außen zeigende, vom Fahrzeuginnenraum abgewandte Vorderseite einer mittleren Säule oder B-Säule aufgebracht werden kann, Ist die B-säule von dem Seltenfenster um einen Spalt beabstandet. Der Spalt erstreckt sich von einer Fensterbrüstung bis zu einem Fahrzeugdach. Ferner liegt eine Dichtung an der zum Fahrzeuginnenraum zeigenden Fläche des Seitenfensters an. Durch die Klebeschicht und die Dichtung wird jedoch eine Durchsicht durch den Spalt zwischen der Vorderseite der B-Säule und dem dazu gegenüberliegenden, hinteren Seitenfenster und dem vorderen Seitenfenster in Richtung des vorderen Seitenfensters verhindert. Nachteilig, hierbei ist auch, dass die Fensterscheibe zumindest in den Bereichen der Klebeschicht mit einer dunklen Farbschicht versehen werden muß. Ferner ist aus der DE 3925804 bekannt, dass das hintere Seitenfenster in Höhe einer hinteren Säule oder C-Säule nach außen hin geöffnet werden kann, indem das hintere Seitenfenster um eine vordere Drehachse geschwenkt wird.

Ferner sind Kraftfahrzeuge mit einem vorderen Seitenfenster bekannt, wobei das Seitenfenster um eine Drehachse so verschwenkbar ist, dass sich beim Öffnen des Seitenfensters eine vordere und eine hintere Fensteröffnung ergibt.

Ferner ist ein Kraftfahrzeug mit einer Coupéform bekannt, bei der ein vorderes Ende eines hinteren, ausstellbaren Seitenfensters direkt an einer B-Säule anliegt. An das hintere Seitenfenster schließt sich ein vorderes Seitenfenster an. Diese Bauweise ist aus optischen Gründen ungünstig.

Aufgabe der Erfindung ist es, ein Kraftfahrzeug zu schaffen, bei dem sich ein designgerechter Eindruck ergibt.

Diese Aufgabe wird durch die Merkmale des Anspruchs 1 gelöst.

Bei dem erfindungsgemäßen Kraftfahrzeug sind auf den beiden Fahrzeugseiten die jeweils hinteren, schwenkbaren Seitenfenster im geschlossenen Zustand mit ihrem vorderen Ende beabstandet zu einer B-Säule angeordnet. Optisch ergibt sich dadurch eine durchgehende Fensterfläche, die jeweils aus dem hinteren und aus dem vorderen Seitenfenster besteht.

Ferner ist die Drehachse um der sich das jeweilige Seitenfenster verschwenken kann, zwischen dem vorderen und hinteren Ende des jeweiligen Seitenfensters ausgebildet, so dass sich bei einem Öffnen des Seitenfensters zwei Fensteröffnungen ergeben. Dadurch kann die Frischluftzufuhr erhöht werden.

In einer vorteilhaften Ausführungsform weist die B-Säule in dem relevanten Bereich eine Einbuchtung auf, so dass der erforderliche Abstand zum jeweiligen hinteren Seitenfenster entsteht.

Vorteilhafterweise beträgt der Abstand zwischen dem vorderen Ende des Seitenfensters und der B-Säule ***10 bis 20 mm***.

Eine Ausführungsform der Erfindung wird nachstehend anhand der Zeichnungen beispielshalber beschrieben. Dabei zeigen:
- Figur 1: eine Seitenansicht eines teilweise dargestellten Kraftfahrzeuges mit einem vorderen und einem hinteren Seitenfenster,
- Figur 2: eine Schnittansicht von oben längs der Linie I-I in der Figur 1 bei einem bekannten Kraftfahrzeug, bei dem ein vorderes Ende des hinteren Seitenfensters drehbar an einer B-Säule angeordnet ist,
- Figur 3: eine Schnittansicht von oben längs der Linie I-I in der Figur 1, bei der ein hinteres Seitenfenster beabstandet zu einer B-Säule angeordnet ist und eine Schwenkachse in Richtung eines hinteren Endes des Seitenfensters verlagert ist und
- Figur 4: eine Schnittansicht von oben entsprechend der Figur 3, wobei sich das Seitenfenster im geöffneten Zustand befindet.

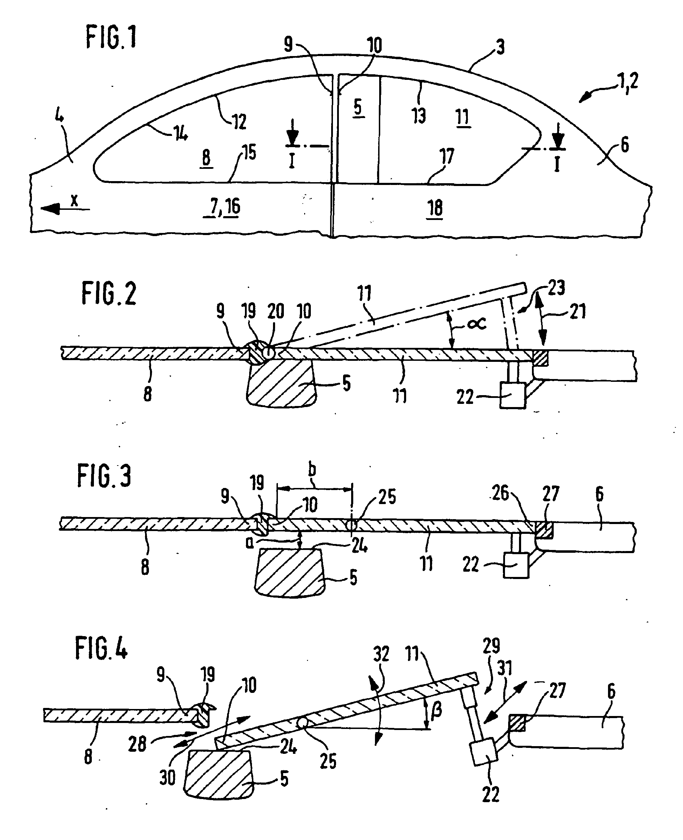

Die Figur 1 zeigt ein nur teilweise dargestelltes Kraftfahrzeug 1, bei dem von einer Karosserie 2 ein Dach 3, eine vordere A-Säule 4, eine mittlere B-Säule 5 und eine hintere C-Säule 6, in Fahrtrichtung x gesehen, dargestellt sind. Bei dem gezeigten Kraftfahrzeug 1 handelt es sich um ein Coupé mit zwei Türen 7. Ein vorderes Seitenfenster 8 liegt mit seinem hinteren Ende 9 an einem vorderen Ende 10 eines hinteren Seitenfensters 11 an. Ein verbleibender Rand 12 und 13 des vorderen bzw. hinteren Seitenfensters 8, 11 wird durch einen Dachrahmen 14, die A - und C - Säule 4, 6, einen oberen Rand 15 eines unteren Türabschnittes 16 und einen oberen Rand 17 einer Seitenwand 18 abgedeckt und über Dichtungen abgedichtet.

In der Figur 2 ist eine Schnittansicht einer bekannten Bauweise dargestellt, bei der an dem hinteren Rand 9 des vorderen Seitenfensters 8 eine Dichtung 19 vorgesehen ist, an die sich das vordere Ende 10 des hinteren Seitenfensters 11 im geschlossenen Zustand anschließt. An dem vorderen Ende 10 des bekannten hinteren Seitenfensters 11 ist eine Drehachse 20 ausgebildet. Das hintere Seitenfenster 11 kann entsprechend einem Pfeil 21 somit über eine Betätigungsvorrichtung 22 um einen vorgegebenen Schwenkwinkel a nach außen hin geöffnet werden, so dass sich in der geöffneten Position eine Öffnung 23 ergibt. Aus der Figur 2 ist ersichtlich, dass das vordere Ende 10 des Seitenfensters 11 an der B-Säule 5 anliegt.

Im Unterschied dazu zeigen die Figuren 3 und 4 die erfindungsgemäße Bauweise, bei der das vordere Ende bzw. der vordere Rand 10 des hinteren Seitenfensters 11 um eine Strecke a von einer Vorderseite 24 der B-Säule 5 beabstandet ist. In den Figuren 3 und 4 wurden gleiche Bauteile wie in den Figuren 1 und 2 mit gleichen Bezugszeichen versehen.

Zwischen dem versenkbaren, vorderen Seitenfenster 8 und dem hinteren, schwenkbaren Seitenfenster 11 ist am hinteren Ende 9 des Seitenfensters 8 eine Dichtung 19 angeordnet. Das Seitenfenster 11 weist eine Drehachse 25 auf, die um eine Strecke b von dem vorderen Ende 10 in Richtung eines hinteren Endes 26 des Seitenfensters 11 versetzt ist. An der C-Säule 6 ist eine Dichtung 27 angeordnet, an der das hintere Ende 26 des Seitenfensters 11 anliegt.

In der Figur 4 befindet sich das Seitenfenster 11 in einer geöffneten Position. Durch die versetzt angeordnete Drehachse 25 ergeben sich eine vordere und eine hintere Fensteröffnung 28, 29, durch die entsprechend den Pfeilen 30 und 31 Luft strömen kann. Die Verschwenkbarkeit des Seitenfensters 11 um einen Schwenkwinkel β ist durch einen Pfeil 32 angedeutet **Der *Schwenkwinkel β liegt bei* β=*****5 bis 20°**.*

## Patentansprüche

1. Kraftfahrzeug mit jeweils einem vorderen Seitenfenster (8) und einem hinteren Seitenfenster (11), wobei das hintere Seitenfenster (11) in einer durch einen Seitenrahmen der Karosserie (2) gebildeten Öffnung zwischen einer hinteren Karosseriesäule (6) und einer dazu benachbarten mittleren Karosseriesäule (5) angeordnet ist, wobei Dichtungen (19, 27) zwischen dem Seitenrahmen, dem vorderen Seitenfenster (8) und dem hinteren Seitenfenster (11) vorgesehen sind, wobei eine Vorderseite (24) der mittleren Karosseriesäule (5) um eine Strecke a von dem vorderen Seitenfenster (8) und dem hinteren Seitenfenster (11) beabstandet ist,
**dadurch gekennzeichnet, dass** sich ein durch die Beabstandung der Vorderseite (24) der mittleren Karosseriesäule (5) von dem vorderen Seitenfenster (8) und dem hinteren Seitenfenster (11) ergebender Spalt die. Durchsicht durchgehend über die gesamte Länge des hinteren Randes (9) des vorderen Seitenfensters (8) erlaubt, wobei diese Länge durch einen Dachrahmen (14) und einem oberen Rand (15) eines unteren Türabschnitts (16) einer Tür (7) begrenzt ist.

2. Kraftfahrzeug nach Anspruch 1, **dadurch gekennzeichnet, dass** das hintere Seitenfenster (11) ein schwenkbares Seitenfenster ist.

3. Kraftfahrzeug nach Anspruch 1 oder 2, **dadurch gekennzeichnet, dass** das schwenkbare Seitenfenster (11) eine Vorrichtung (22) zum öffnen und Schließen des Seitenfensters (11) aufweist, dass das Seitenfenster (11) um eine im Seitenrahmen ausgebildete Drehachse (25) gelagert ist.

4. Kraftfahrzeug nach einem der vorhergehenden Ansprüche, **dadurch gekennzeichnet, dass** die Drehachse (25) zwischen einem vorderen Ende (10) und einem hinteren Ende (26) des hinteren Seitenfensters (11) ausgebildet ist.

5. Kraftfahrzeug nach einem der vorhergehenden Ansprüche, **dadurch gekennzeichnet, dass** das vordere Ende (10) des hinteren Seitenfensters (11) im geschlossenen Zustand von der dazu gegenüberliegenden Karosseriesäule (5) um eine Strecke a beabstandet ist, so dass sich beim Öffnen des hinteren Seitenfensters (11) über die Vorrichtung (22) vor und hinter der Drehachse (25) jeweils eine Fensteröffnung (28, 29) ergibt, die durch ein Verschwenken des vorderen Teils (10) des hinteren Seitenfensters (11) nach innen und des hinteren Teils (26) des hinteren Seitenfensters (11) nach außen entstehen.

6. Kraftfahrzeug nach einem der vorhergehenden Ansprüche, **dadurch gekennzeichnet, dass** die Strecke a zwischen dem vorderen Ende (10) des hinteren Seitenfensters (11) und der Karosseriesäule (5) ***a* = 10 *bis* 30 mm** beträgt.

7. Kraftfahrzeug nach einem der vorhergehenden Ansprüche, **dadurch gekennzeichnet, dass** ein Schwenkwinkel β des hinteren Seitenfensters (11) um die Drehachse (25) bei ***β= 5 bis 20°*** liegt.

8. Kraftfahrzeug nach einem der vorhergehenden Ansprüche, **dadurch gekennzeichnet, dass** an einem hinteren Rand (9) des vorderen Seitenfensters (8) eine Dichtung (19) zur Abdichtung des vorderen Endes (10) des hinteren Seitenfensters (11) angeordnet ist.

## Claims

1. A motor vehicle with a front side window (8) and a rear side window (11), wherein the rear side window (11) is disposed in an opening formed by a side frame of the body (2) between a rear column (6) and a neighbouring middle column (5), wherein seals (19, 27) are provided between the side frame, the front side window (8) and the rear side window (11), wherein a front side (24) of the middle column (5) being situated at a distance (a) from the front side window (8) and the rear side window (11), **characterised in that** a gap formed by the space between the front side (24) of the middle column (5) and the front and rear side windows (8, 11) gives a view over the entire length of the rear edge (9) of the front side window (8), the said length being bounded by a roof frame (14) and a top edge (15) of a bottom portion (16) of a door (7).

2. A vehicle according to claim 1, **characterised in that** the rear side window (11) is pivotable.

3. A vehicle according to claim 1 or claim 2, **characterised in that** the rear side window (11) comprises a device (22) for opening and closing it, and is mounted on a hinge or axis of rotation (25) formed in the side frame.

4. A vehicle according to any of the preceding claims, **characterised in that** the axis of rotation or hinge (25) is situated or embodied between a front end (10) and a rear end (26) of the rear side window (11).

5. A vehicle according to any of the preceding claims, **characterised in that** the front end (10) of the rear window (11), when closed, is separated from the facing column (5) by a distance (a), so that when the rear window (11) is opened by means of the device (22), the result is an opening (28) in front and an opening (29) behind the axis of rotation (25), produced by pivoting the front part (10) of the rear window (11) inwards and the rear part (26) of the rear window (11) outwards.

6. A vehicle according to any of the preceding claims, **characterised in that** the distance (a) between the column (5) and the front end (10) of the rear window (11) is a = 10 to 30 mm.

7. A vehicle according to any of the preceding claims, **characterised in that** the angle (β) through which the rear side window (11) can pivot around the axis (25) is β = 5 to 20°.

8. A vehicle according to any of the preceding claims, **characterised in that** a seal (19) is disposed on a rear edge (9) of the front window (8) in order to seal the front end (10) of the rear window (11).

## Revendications

1. Véhicule automobile avec une fenêtre latérale avant (8) et une fenêtre latérale arrière (11), la fenêtre latérale arrière (11) étant disposée dans une ouverture formée par un cadre latéral de la carrosserie (2) entre un montant de carrosserie arrière (6) et un montant de carrosserie central (5) adjacent, avec des joints (19, 27) prévus entre le cadre latéral, la fenêtre latérale avant (8) et la fenêtre latérale arrière (11), et un côté avant (24) du montant de carrosserie central (5) se trouvant à une distance a de la fenêtre latérale arrière (11),
**caractérisé en ce que**
la fente qui apparaît par la mise à distance du côté avant (24) du montant de carrosserie central (5) par rapport à la fenêtre latérale avant (8) et la fenêtre latérale arrière (11) permet de voir de façon continue toute la longueur de bord arrière (9) de la fenêtre latérale avant (8), cette longueur étant limitée par un cadre de toit (14) et un bord supérieur (15) d'une partie inférieure (16) d'une porte (7).

2. Véhicule automobile selon la revendication 1,
**caractérisé en ce que**
la fenêtre latérale arrière (11) est une fenêtre latérale pivotante.

3. Véhicule automobile selon la revendication 1 ou 2,
**caractérisé en ce que**
la fenêtre latérale pivotante (11) présente un dispositif (22) pour ouvrir et fermer la fenêtre latérale (11), et la fenêtre latérale (11) est montée sur un axe de rotation (25) formé dans le cadre latéral.

4. Véhicule automobile selon l'une des revendications précédentes,
**caractérisé en ce que**
l'axe de rotation (25) est formé entre une extrémité avant (10) et une extrémité arrière (26) de la fenêtre latérale arrière (11).

5. Véhicule automobile selon l'une des revendications précédentes,
**caractérisé en ce que**
l'extrémité avant (10) de la fenêtre latérale arrière (11), à l'état fermé, est à une distance a du montant de carrosserie (5) qui se trouve en face, de sorte qu'à l'ouverture de la fenêtre latérale arrière (11) sous l'effet du dispositif (22), des ouvertures de fenêtre (28, 29) devant et derrière l'axe de rotation (25) apparaissent par un pivotement de la partie avant (10) de la fenêtre latérale arrière (11) vers l'intérieur et de la partie arrière (26) de la fenêtre latérale arrière (11) vers l'extérieur.

6. Véhicule automobile selon l'une des revendications précédentes,
**caractérisé en ce que**
la distance a entre l'extrémité avant (10) de la fenêtre latérale arrière (11) et le montant de carrosserie (5) est de a = 10 à 30 mm.

7. Véhicule automobile selon l'une des revendications précédentes,
**caractérisé en ce qu'**
un angle de pivotement β de la fenêtre latérale arrière (11) autour de l'axe de rotation (25) est de β = 5 à 20°.

8. Véhicule automobile selon l'une des revendications précédentes,
**caractérisé en ce qu'**
joint (19) disposé sur un bord arrière (9) de la fenêtre latérale avant (8) assure l'étanchéité de l'extrémité avant (10) de la fenêtre latérale arrière (11).
